**Europäisches Patentamt**

**European Patent Office**

**Office européen des brevets**

(19)

(11) Veröffentlichungsnummer: **0 154 799**
**B1**

(12) # EUROPÄISCHE PATENTSCHRIFT

(45) Veröffentlichungstag der Patentschrift:
03.02.88

(51) Int. Cl.⁴: **F 16 D 65/60**

(21) Anmeldenummer: **85101092.6**

(22) Anmeldetag: **02.02.85**

(54) Nachstellvorrichtung für Fahrzeugbremsen.

(30) Priorität: **15.03.84 DE 3409454**

(43) Veröffentlichungstag der Anmeldung:
**18.09.85 Patentblatt 85/38**

(45) Bekanntmachung des Hinweises auf die Patenterteilung:
**03.02.88 Patentblatt 88/5**

(84) Benannte Vertragsstaaten:
**DE GB IT SE**

(56) Entgegenhaltungen:
**EP-A-2 104 921**
**DE-A-2 120 809**
**DE-B-1 575 778**

(73) Patentinhaber: **Bergische Achsenfabrik Fr. Kotz & Söhne, Am Ohlerhammer, D-5276 Wiehl 1 (DE)**

(72) Erfinder: **Ebbinghaus, Wilfried, Perkerstrasse 42, D-5276 Wiehl (DE)**
Erfinder: **Henze, Erwin, Freiherr- vom- Stein- Strasse 28, D-5276 Wiehl (DE)**
Erfinder: **Gross, Wilhelm, Altes Land 21, D-5276 Wiehl (DE)**

(74) Vertreter: **Patentanwälte Dipl.- Ing. Alex Stenger Dipl.- Ing. Wolfram Watzke Dipl.- Ing. Heinz J. Ring, Kaiser- Friedrich- Ring 70, D-4000 Düsseldorf 11 (DE)**

LIBER, STOCKHOLM 1988

**Beschreibung**

Gegenstend der Erfindung ist eine Nachstellvorrichtung für Fahrzeugbremsen, insbesondere Kraftfahrzeugbremsen, mit einem als Bremshebel dienenden Gehäuse, in dem ein aus Schnecke und Schneckenrad bestehendes Nachstellgetriebe angeordnet ist, welches über eine Kupplung mit Stirnverzahnung und ein Treibglied mit einem in das Gehäuse hineinragenden Hebel zusammenarbeitet, der mit einem feststehenden Teil des Fahrzeuges verbunden ist.

Eine Nachstellvorrichtung dieser Gattung ist aus der DE-A-2 120 809 bekannt. Bei dieser bekannten Nachstellvorrichtung wird der maximale Hub des Bremshebels durch den maximalen Hub des zwischen der Kupplung und dem Hebel angeordneten Treibgliedes begrenzt, welches deshalb einschließlich seiner Anschlußteile entsprechend stark dimensioniert werden muß, weil es sonst zu Bruch gehen kann. Ein weiterer Nachteil dieser bekannten Nachstellvorrichtung besteht darin, daß die Stirnverzahnung der auf der Schneckenwelle angeordneten Kupplung auch um mehr als eine Zahnteilung nachgestellt werden kann, wenn ein großer Bremshub, große Elastizitäten und Wärmedehnungen zusammentreffen. Dadurch kann das für eine ordnungsgemäße Funktion der Bremsen erforderliche Lüftspiel beseitigt werden. Schließlich besteht bei dieser bekannten Nachstellvorrichtung die auf der Schneckenwelle angeordnete Kupplung mit der Stirnverzahnung aus zwei selbständigen Konstruktionsteilen. Davon ausgehend liegt der Erfindung die Aufgabe zugrunde, eine einfach konstruierte Nachstellvorrichtung zu schaffen, deren maximaler Hub durch einen zwischen Gehäuse und Hebel vorgesehenen Anschlag begrenzt ist, um das Treibglied und dessen Kupplungspartner bei einem Überhub vor einem Bruch zu schützen.

Zur technischen Lösung dieser Aufgabe wird vorgeschlagen, an dem in das Gehäuse hineinragenden Hebel einen Anschlagnocken und am Gehäuse selbst eine Aussparung anzuordnen, die den maximalen Hub des Bremshebels auf den maximalen Hub des Treibgliedes begrenzen.

Bei einer praktischen Ausführungsform kann der Anschlagnocken an einem der Innenwand des Gehäuses benachbarten Ring ausgebildet sein, der über eine Hülse mit dem Hebel verbunden ist.

Eine nach dieser technischen Lehre ausgebildete Nachstellvorrichtung hat den Vorteil, daß die Kupplungsteile, welche das Nachstellgetriebe mit dem feststehenden Hebel verbinden, von der Hubbegrenzung entlastet sind und aus diesem Grunde nicht nur entsprechend kleiner dimensioniert werden können, sondern auch noch genauer arbeiten. Insbesondere das Treibglied zwischen der Kupplung und dem feststehenden Hebel kann nicht mehr verbogen werden. Damit leistet die Erfindung einen erheblichen Beitrag zur Sicherheit im Straßenverkehr.

Weitere Einzelheiten und Vorteile des Gegenstandes der Erfindung ergeben sich aus der nachfolgenden Beschreibung der zugehörigen Zeichnungen, in denen eine bevorzugte Ausführungsform einer erfindungsgemäß ausgebildeten Nachstellvorrichtung in Ansichten und Schnitten dargestellt worden ist. In den Zeichnungen zeigen:

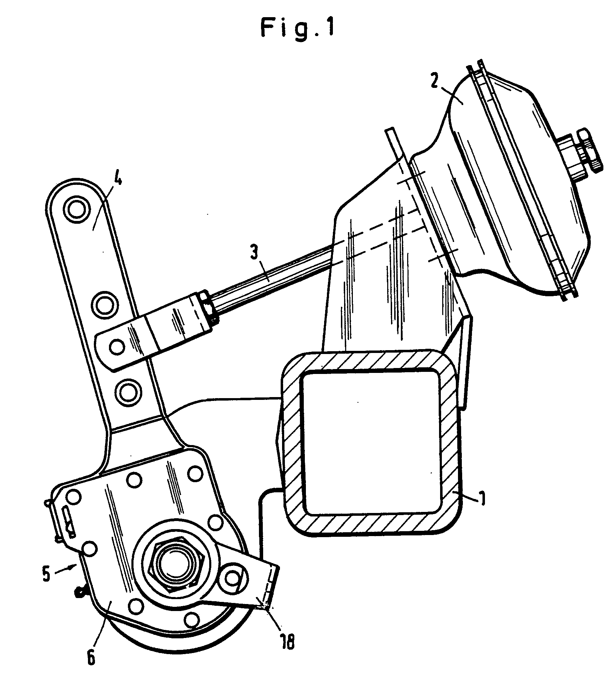

Fig. 1 ein Bremsgestänge mit einer Nachstellvorrichtung in Seitenansicht;

Fig. 2 eine Nachstellvorrichtung mit teilweise entferntem Deckel zur Veranschaulichung einer Hubbegrenzung in Ausgangslage und in Seitenansicht;

Fig. 3 dieselbe Nachstellvorrichtung zur Veranschaulichung der Hubbegrenzung in Endlage in Seitenansicht;

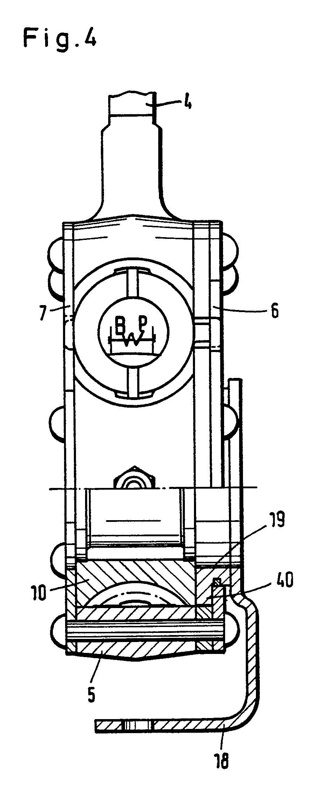

Fig. 4 dieselbe Nachstellvorrichtung entlang der Linie IV-IV in Fig. 2 geschnitten in Stirnansicht;

Fig. 5 dieselbe Nachstellvorrichtung zur Veranschaulichung eines Treibgliedes in Ausgangslage entlang der Linie V-V in Fig. 2 geschnitten;

Fig. 6 dieselbe Nachstellvorrichtung zur Veranschaulichung der Endlage des Treibgliedes entlang der Linie VI-VI in Fig. 3 geschnitten;

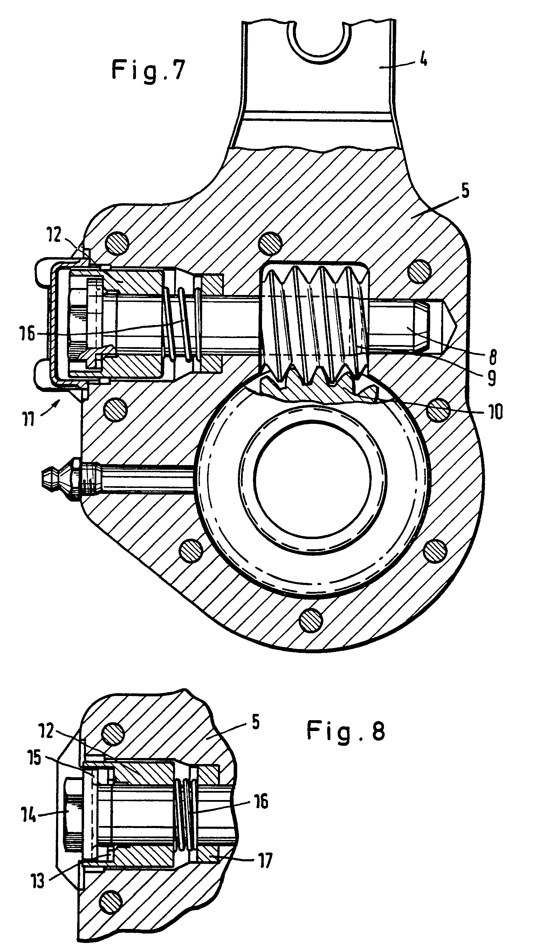

Fig. 7 dieselbe Nachstellvorrichtung zur Veranschaulichung einer in Eingriff befindlichen Stirnverzahnung einer Kupplung zwischen einer Schneckenwelle und einem auf dieser gelagerten Kupplungsring entlang der Linie VII-VII in Fig. 6 geschnitten;

Fig. 8 einen Ausschnitt aus Fig. 7 mit ausgerückter Stirnverzahnung der Kupplung;

Fig. 9 die Schneckenwelle in Seitenansicht;

Fig. 10 dieselbe Schneckenwelle in Ansicht auf ihren Nachstellkopf;

Fig. 11 den Kopf der Schneckenwelle entlang der Linie XI-XI in Fig. 10 geschnitten in vergrößerter Darstellung;

Fig. 12 einen Abschnitt einer Abwicklung der Stirnverzahnung in Richtung des Pfeiles x in Fig. 11 gesehen om inneren Durchmesser;

Fig. 13 dieselbe Abwicklung der Stirnverzahnung wie in Fig. 12 am äußeren Durchmesser.

Ein Bremsgestänge besteht aus einem am Achskörper 1 befestigten Membranzylinder 2 mit einer Kolbenstange 3, die an einem Bremshebel 4 angreift, der auf einer - nicht dargestellten - Bremswelle angeordnet ist. Durch die Bewegung der Kolbenstange können die Bremsnocken in einer Trommelbremse gedreht und damit die Bremsbacken bzw. ihre Bremsbeläge zur Anlage an einer Bremstrommel gebracht werden.

Mit dem Bremshebel 4 ist ein Gehäuse 5 mit einem äußeren Deckel 6 und einem inneren Deckel 7 verbunden, in welchem eine Nachstellvorrichtung zum Ausgleich des Bremsbelagverschleisses angeordnet ist. Die Nachstellvorrichtung besteht aus einer auf einer Schneckenwelle 8 angeordneten Schnecke 9 und einem auf der - nicht dargestellten - Bremswelle mit einer Innenverzahnung befestigten Schneckenrad 10.

Neben der Schnecke 9 ist auf einer Seite in dem Gehäuse 5 eine Kupplung 11 angeordnet, welche aus einem auf der Schneckenwelle 8 gelagerten Kupplungsring 12 mit einer Stirnverzahnung 13 und einer auf der Unterseite eines als Sechskant ausgebildeten Schneckenwellenkopfes 14 angeordneten Stirnverzahnung 15 besteht. Die beiden Stirnverzahnungen 13, 15 werden mit einer auf der Schneckenwelle 8 angeordneten Druckfeder 16 in Eingriff gehalten. Zwischen der Druckfeder 16 und der Schneckenwelle 8 ist auf der anderen Seite eine Bremsscheibe 17 angeordnet, welche ein unbeabsichtigtes Verdrehen der Schneckenwelle 8 verhindert.

Der Kupplungsring 12 kann gegen die Wirkung der Druckfeder 16 so weit in das Gehäuse 5 hinein verschoben werden, daß die Stirnverzahnung 13 außer Eingriff gelangt, um den Bremshebel 4 im Verhältnis zur - nicht dargestellten - Bremswelle mit einem am Schneckenwellenkopf 14 angreifenden Schlüssel justieren zu können.

Um die - nicht dargestellte - Bremswelle ist ein Hebel 18 angeordnet, der mit einer Hülse 19 unter dem äußeren Deckel 6 hindurch in das Gehäuse 5 hineingeführt ist und am anderen Ende einen Ring 20 mit einem Anschlagnocken 21 besitzt, welcher in eine Aussparung 22 des Gehäuses 5 eingreift. Der Anschlagnocken 21 und die Aussparung 22 begrenzen den maximalen Hub des Bremshebels 4 im Verhältnis zu dem Hebel 18, der mit einem feststehenden Teil des Fahrzeuges, beispielsweise dem Achkörper 1 verbunden ist.

Zwischen der Hülse 19 des Hebels 18 und dem Kupplungsring 12 ist ein flaches Treibglied 23 angeordnet. Dieses Treibglied 23 greift einerseits mit einem runden Kopf 24 in die Hülse 19 und andererseits mit einem Haken 25 in eine Ausnehmung 26 des Kupplungsringes 12 ein.

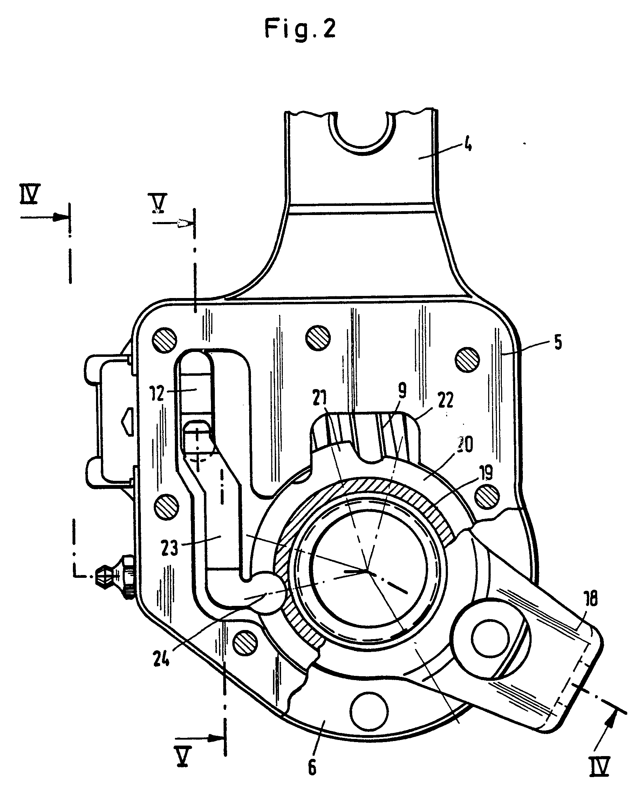

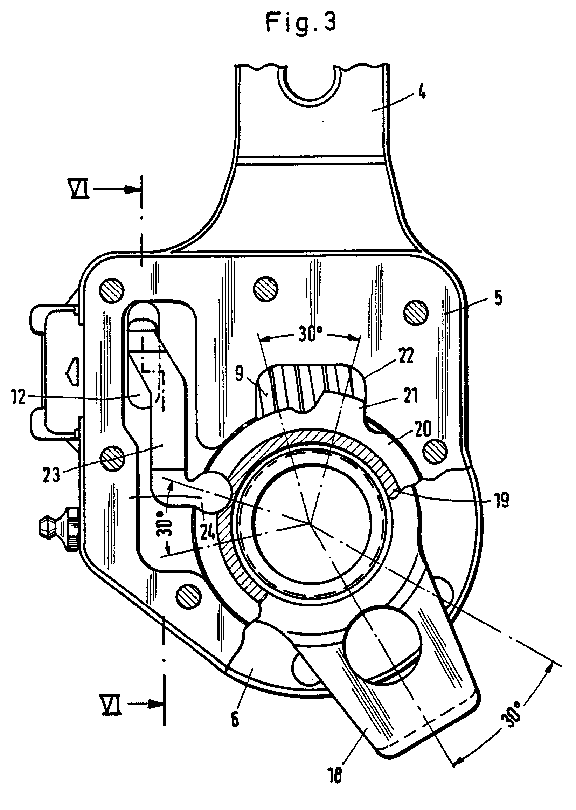

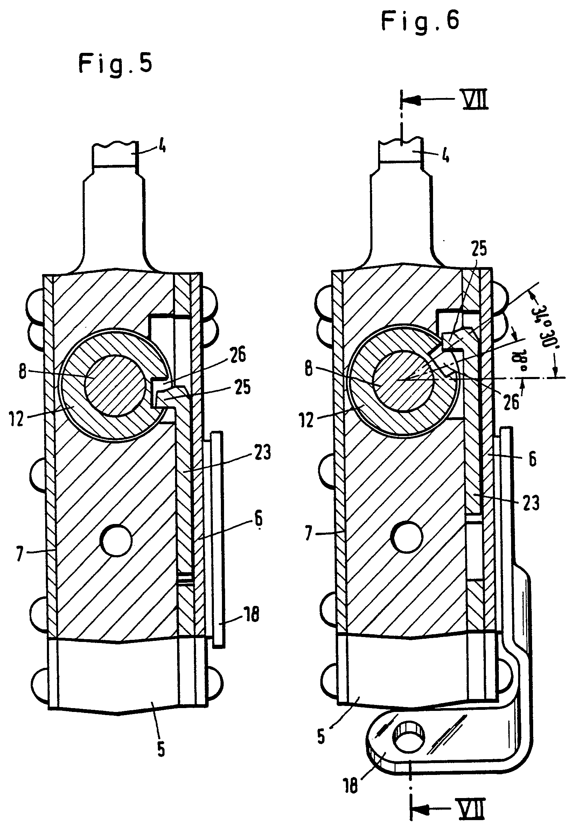

Beim Betätigen des Bremsgestänges wird der Bremshebel 4 relativ zum feststehenden Hebel 18 verdreht, wie es sich aus den Gegenüberstellungen der Fig. 2 und 3 bzw. 5 und 6 ergibt. Die maximale Verschwenkbewegung wird durch die Größe der Aussparung 22 im Gehäuse 5 bzw. des in diese eingreifenden Anschlagnockens 21 begrenzt und beträgt im dargestellten Ausführungsbeispiel 30°. Bei der Schwenkbewegung wird der Kupplungsring 12 mit dem Treibglied 23 relativ zur Schneckenwelle 8 gedreht. Solange der Bremshub unterhalb der Teilung der Stirnverzahnungen 13, 15 der Kupplung 11 bleibt, erfolgt keine Nachstellung. Sobald der Bremshub aber infolge des Bremsbelagverschleißes größer wird als die Teilung der beiden Stirnverzahnungen 13, 15, dann greifen die Zähne über, so daß beim Rückhub eine Nachstellung erfolgt.

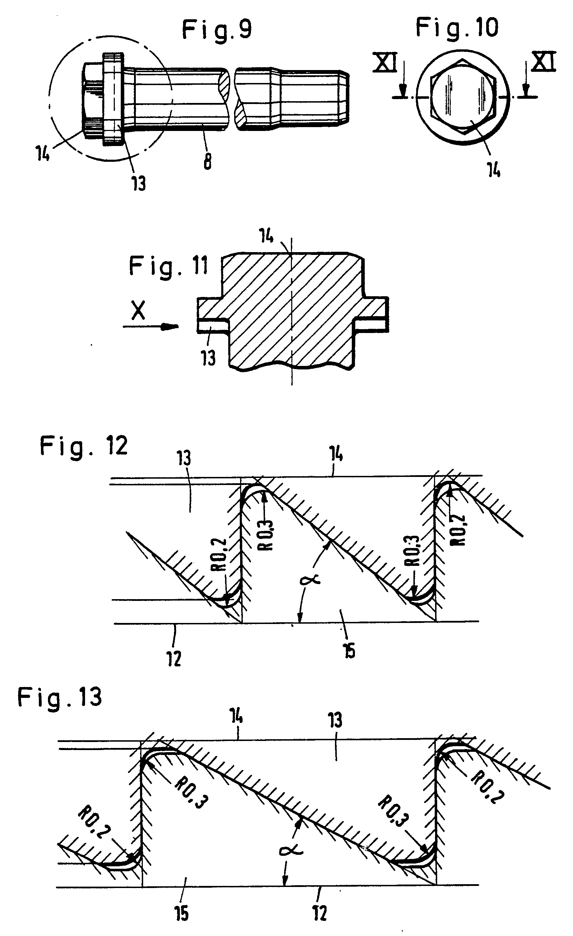

Die Schneckenwelle 8, unter deren Schneckenwellenkopf 14 die Stirnverzahnung 13 ausgebildet ist, besteht aus normalem Stahl. Der Kupplungring 12, welcher drehbar auf der Schneckenwelle 8 angeordnet ist, besteht aus Sintermetall. Damit die Zähne der Stirnverzahnung 15 am Kupplungsring 12 immer eine satte Auflage an der Stirnverzahnung 13 der Schneckenwelle 8 haben, sind die beiden Verzahnungen schraubenförmig ausgebildet, wie es sich aus den Abwicklungen der Fig. 12 und 13 am inneren und äußeren Durchmesser ergibt.

Die Teilung der Zähne an den beiden Stirnverzahnungen 13, 15 und die Abmessungen der Ausnehmung 26 am Kupplungsring 12 und des Hakens 25 am Treibglied 23 müssen aufeinander abgestimmt werden, damit bei einem Hub immer nur eine Nachstellung um maximal eine Zahnlänge erfolgt und eine Beseitigung des für die Funktion der Bremse notwendigen Lüftspieles vermieden wird. Zu diesem Zweck ist der Haken 25 an seiner Außenseite abgeschrägt und die Ausnehmung 26 ist größer als der Haken 25, so daß das vordere Ende des Hakens 25 beim tangentialen Verschieben aus der Ausnehmung 26 austreten kann und den Kupplungsring 12 danach nicht mehr verstellt. Solange der Haken 25 aus der Ausnehmung 26 ausgetreten ist, wird der Kupplungsring 12 mit dem Ende des Hakens 25 in seiner Lage festgehalten, damit der Haken 25 beim Rückhub auch wieder in die Ausnehmung eintreten kann. Der Winkel, um den der Kupplungsring 12 maximal verstellt werden kann, ist geringfügig größer als die Teilung der Zähne an den beiden Stirnverzahnungen 13, 15. Auf diese Weise kann beim Rückhub eine Nachstellung um mehrere Zahnteilungen vermieden werden.

**Patentansprüche**

1. Selbsttätige Nachstellvorrichtung für Fahrzeugbremsen, insbesondere Kraftfahrzeugbremsen, mit einem als Bremshebel (4) dienenden Gehäuse (5), in dem ein aus Schnecke (9) und Schneckenrad (10) bestehendes Nachstellgetriebe angeordnet ist, welches über eine Kupplung (11) mit Stirnverzahnungen (13, 15) und ein Treibglied (23) mit einem in das Gehäuse (5) hineinragenden Hebel (18) zusammenarbeitet, der mit einem feststehenden Teil des Fahrzeuges verbunden ist, dadurch gekennzeichnet, daß an dem in das Gehäuse (5) hineinragenden Hebel (18) ein Anschlagnocken (21) und am Gehäuse (5) eine Aussparung (22) angeordnet sind, die den maximalen Hub des Bremshebels (4) auf den maximalen Hub des Treibgliedas (23) begrenzen.

2. Nachstellvorrichtung nach Anspruch 1, dadurch gekennzeichnet, daß der Anschlagnocken (21) an einem der Innenwand des Gehäuses (5) benachbarten Ring (20) ausgebildet ist, der über eine Hülse (19) mit dem Hebel (18) verbunden ist.

## Claims

1. An automatic slack adjuster for vehicle brakes, more particularly motor vehicle brakes, the adjuster having a casing (5) which is operative as brake lever (4) and in which a slack adjuster mechanism comprising a worm (9) and a worm wheel (10) is disposed, the mechanism (5) co-operating, by way of an entraining member (23) and of a coupling (11), the latter having end toothings (13, 15), with a lever (18) which extends into the casing (5) and which is secured to a stationary, part of the vehicle, characterised in that an abutment (21) is disposed on the lever (18) which extends into the casing (5) and the same is formed with a recess (22), the abutment and recess limiting the maximum stroke of the brake lever (4) to the maximum stroke of the entraining member (23).

2. An adjuster according to claim 1, characterised in that the abutment (21) is formed on a ring (20) which is adjacent the inner wall of the casing (5) and which is connected by way of a sleeve (19) to the lever (18).

## Revendications

I. Dispositif automatique de rattrapage de jeu pour freins de véhicule, notament freins de véhicule automobile, muni d'un boîtier (5) servant de levier de frein (4), dans lequel est disposé un mécanisme de rattrapage de jeu qui se compose d'une vis sans fin (9) et d'une roue tangente (10), ce mécanisme coopérant, par l'intermédiaire d'un accouplement (11) à crantage (13, 15) et d'un élément moteur (23), avec un levier (18) s'engageant dans le boîtier (5), ce levier étant relié à une partie fixe du véhicule, caractérisé en ce qu'un ergot de butée (21) est disposé sur le levier (18) s'engageant dans le boîtier (5) et un évidement (22) est pratiqué dans le boîtier (5), cet ergot et cet évidement limitant la course maximale du levier de frein (4) à la course maximale de l'organe moteur (23).

2. Dispositif de rattrapage de jeu selon la revendication 1, caractérisé en ce que l'ergot de butée (21) est formé sur une couronne (20) voisine de la paroi intérieure du boîtier (5), cette couronne étant assemblée avec le levier (18) par une douille (19).

Fig.1

## Fig. 2

# Fig.3

# Fig.4

Fig.5

Fig.6

Fig. 7

Fig. 8

Fig.9

Fig.10

14  13  8

XI  XI

14

Fig. 11

14

X

13

Fig. 12

13  14

R0,2  R0,3  R0,3  R0,2

α

12  15

Fig.13

14  13

R0,3  R0,3  R0,2

R0,2  α

15  12